# EUROPEAN PATENT APPLICATION

(11) **EP 0 864 894 A1**
(43) Date of publication of application: **16.09.1998**
(21) Application number: 98101202.4
(22) Date of filing: 23.01.1998
(51) Int. Cl.: G02B 6/43, G02B 6/28

(54) **A waveguide**

(30) Priority: 18.02.1997 GB 9703312
(71) Applicant: International Technology Consultants Ltd., Burgess Hill, West Sussex RH15 9NF (GB)
(72) Inventor: Mould, David Frederick, Burgess Hill, RH15 9ST (GB); Bollmann, Klaus, Plumpton Green, East Sussex, BN7 3BD (GB)
(74) Representative: Frankland, Nigel Howard

(57) **Abstract**

A waveguide comprising a block of substantially transparent material supporting the transmission of multiple wavelengths of light, said waveguide having: an input portion through which a light signal enters the waveguide; an output portion through which said signal exits the waveguide; and focusing means substantially opposite the output portion to direct light transmitted through the waveguide and impinging on the focusing means towards the output portion.

Another aspect of the present invention provides a local bus system for a computer comprising a waveguide of the present invention, wherein the light signal comprises a light signal from an optoelectronic transceiver for transmitting and receiving light signals, the light signals being generated in response to electrical signals generated by components of the computer to which the receiver is connected.

## Description

THIS INVENTION relates to a waveguide and more particularly to a waveguide through which a plurality of light signals may be received and transmitted.

In personal computers, a system board or mother board is connected to one or more cards such as modem cards, sound cards, expansion cards and network cards by electrical connections such as an edge connector or the like. Electrical ribbon cable may also be used to interconnect various other components of the computer to one another or to the mother board. The close proximity of the electrical signals carried through the various connectors or ribbon cables can result in a degree of electrical interference. The RF interference created can interfere with the operation of other components of the computer and may also corrupt the signals carried between the various cards in the computer or along the ribbon cable.

The present invention seeks to provide a solution to the above-mentioned problems.

Accordingly, the present invention provides a waveguide comprising a block of substantially transparent material supporting the transmission of multiple wavelengths of light, said waveguide having: an input portion through which a light signal enters the waveguide; an output portion through which said signal exits the waveguide; and focusing means substantially opposite the output portion to direct light transmitted through the waveguide and impinging on the focusing means towards the output portion.

Preferably, the focusing means comprises an indentation in the waveguide block.

Conveniently, the indentation comprises a concave groove.

Advantageously, the indentation comprises a concave dome.

Preferably, the internal surface of the focusing means is internally reflective.

Conveniently, the external surface of the focusing means is provided with a reflective coating.

Advantageously, the coating is a metallic layer.

Preferably, a plurality of focusing means are provided along the waveguide block, there being a corresponding output portion opposite each focusing means.

Conveniently, all the focusing means are located along one surface of the waveguide block.

Advantageously, the input portion is substantially opposite a focusing means such that the light signal enters the waveguide towards the focusing means, said focusing means reflecting the light along the waveguide block.

Preferably, the input portion and the output portion comprise the same portion of waveguide block opposite the focusing means.

Conveniently, the input portion comprises a portion of the waveguide block at an end of the block.

Advantageously, one or each end of the waveguide block is provided with a reflective surface.

Preferably, one or each end of the waveguide block is provided with a diffuser.

Conveniently, the or each input portion or output portion is provided with a lens to focus light into or out of the waveguide block.

Another aspect of the present invention provides a local bus system for a computer comprising a waveguide of the present invention, wherein the light signal comprises a light signal from an optoelectronic transceiver for transmitting and receiving light signals, the light signals being generated in response to electrical signals generated by components of the computer to which the transceiver is connected.

Advantageously, an optoelectronic transceiver is located adjacent the or each output portion of the waveguide block.

Preferably, a fibre optic cable is situated between an input portion or an output portion and a respective optoelectronic transceiver.

In order that the present invention may be more readily understood, embodiments thereof will now be described, by way of example, with reference to the accompanying drawings, in which:
FIG. 1 is a perspective view of a waveguide embodying the present invention, parts of the waveguide being shown in phantom;
FIG. 2 is a perspective view of one end of the waveguide of Figure 1 and a part of an expansion card for a PC fitted with an optoelectronic transceiver; and
FIG. 3 is a schematic representation of a waveguide embodying the present invention acting as a local bus between a plurality of PC cards and a mother board for a personal computer.

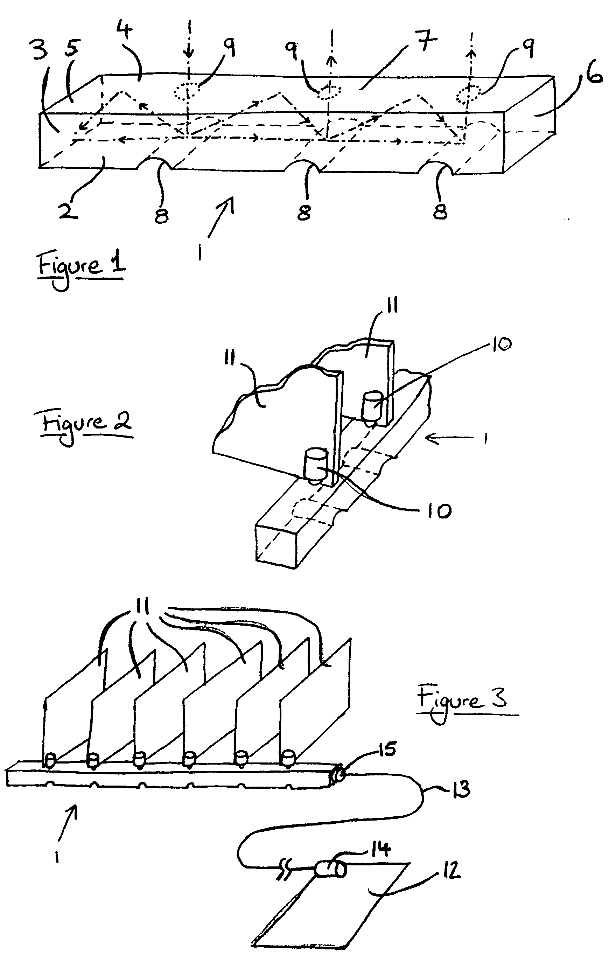

Referring to Figure 1, a waveguide embodying the present invention comprises a block 1 of substantially transparent material such as acrylic plastic. The transparent material is capable of supporting the transmission of multiple wavelengths of light through the block. In the example shown in Figure 1, the block comprises an elongate parallelepiped having a base surface 2, two elongate upstanding side surfaces 3,4, two end faces 5,6 and a top surface 7.

The base surface 2 is formed with a plurality of laterally extending concave grooves 8 which are equispaced along the length of the block 1. The curved internal surface of each groove 8 is internally reflective.

An optoelectronic transceiver or a fibre optic cable connected to an optoelectronic transceiver is placed adjacent the top surface 7 of the waveguide block 1 such that the light emitting and receiving portion of the optoelectronic transceiver or the fibre optic cable is opposite a respective groove 8. The area of the top surface 7 immediately adjacent the optoelectronic transceiver and opposite a groove 8 is known as the input portion or output portion of the waveblock depending upon whether the optoelectronic transceiver is respectively transmitting or receiving. The input portions and output portions are represented in Figure 1 by the dotted circles 9.

Light entering through the input portions 9 of the waveblock 1 is reflected by the groove 8 opposite the respective input portion in a direction substantially along the length of the waveguide block 1. In the example shown in Figure 1, light is shown entering the waveblock 1 by the left most input portion 9, the light being reflected by the internally reflective surface of the groove 8 along the waveguide in both directions away from the groove 8.

The other grooves 8 along the waveguide block 1 receive the light from the first groove 8. The light impinging on the other grooves 8 is reflected by the internal reflective surfaces of the grooves 8 up towards the output portions 9 opposite the respective grooves 8 such that a portion of the reflected light exits from the waveguide block 1 through a respective output portion 9. In this manner, the grooves 8 serve to focus light transmitted along the length of the waveguide block 1 toward the top surface 7 and, in particular, towards the output portions 9 of the top surface 7 where any light exiting through the output portions 9 can be picked up by an optoelectronic transceiver or fibre optic cable immediately adjacent the output portion 9.

The waveguide block 1 permits transmission of light through the respective input portions and out of respective output portions to other optoelectronic transceivers and vice versa such that any electronic circuitry such as PC expansion cards, a mother board or other computer components are effectively electrically isolated from one another and communicate with one another by the light signals transmitted through the waveguide block 1. In this regard, the waveguide block 1 is capable of supporting multiple wavelengths of light. The light signals being sent by respective components of the computer are each at a predetermined wavelength so that the different signals do not interfere with one another within the waveguide block 1 and can be easily interpreted and controlled. Preferably, the waveguide block 1 supports wavelengths of light in the infrared range.

Figure 2 illustrates the waveguide block 1 of Figure 1 being optically coupled to two optoelectronic transceivers 10 mounted on PC cards 11 so that light signals may be transmitted and received between the two cards 11 and a mother board (not shown).

In Figure 3, a waveguide block 1 is optically connected to a plurality of PC cards 11 by way of optoelectronic transceivers 10 which are able to pass control and data information between the PC cards 11 and a mother board 12. The mother board 12 is connected to the waveguide block 1 in the embodiment shown in Figure 3 by means of a fibre optic cable 13. One end of the fibre optic cable 13 terminates in an optoelectronic transceiver 14 which is mounted on the mother board 12 and the other end of the cable 13 terminates in a lens or suitable terminal end 15 which is optically coupled to an end face 6 of the waveguide block 1 so as to transmit and receive light along the length of the waveguide block 1 to and from the respective PC cards 11. The waveguide block 1 thereby acts as a local bus for carrying both control and data information between the PC cards 11 and the mother board 12. The use of the waveguide serves to electrically decouple the components of the computer linked by the waveguide from one another, thereby reducing electrical and RF interferance between components and signals between components.

As previously described, the grooves 8 act as a focusing means for reflecting or, in some circumstances, refracting light travelling along the waveguide block 1 towards the top surface 7 of the waveguide block 1 and, more particularly, towards the output portions 9 in the top surface 7. Similarly, the grooves 8 act as focusing means for reflecting or, in some circumstances, refracting light entering the waveguide block 1 through the input portions 9 along the waveguide block 1 towards the other grooves 8. Other embodiments of the waveguide have been envisaged in which the grooves 8 are replaced by concave domes which also have a substantially reflective internal surface.

The internal surface of the grooves 8 may be naturally internally reflective. It is also possible to supplement the reflectivity of the grooves 8 by providing a metallic coating or other reflective surface on the external surface of the groove 8. Additionally, it is also envisaged that metallic semi-circular cylinders or the like can be inserted in the grooves 8 to improve the reflectivity of the grooves 8. Similarly, in the case where domes are being used instead of grooves, the domes may receive metal ball bearings or the like to improve the reflectivity of the domed portion of the waveguide block 1.

Whilst the focusing means has been described as an indentation such as a groove or dome in the waveguide block, it is envisaged that the focussing means may be provided by a portion or insert in the block having a different refractive index to that of the main body of the block. The portion or insert is so arranged that light impinging on the portion of block is refracted towards the top surface of the block and, more particularly, towards the output portions. The opposite effect applies to light entering the input portions and being refracted by the portions or inserts along the waveguide block.

The end surfaces 5,6 may also be provided with reflective surfaces or, in preferred embodiments, one end of the waveguide block 1 is provided with a diffuser to prevent reflection of light which has already travelled along the length of the waveguide block 1 so that signals are not duplicated and received again by the respective optoelectronic transceivers adjacent the output portions 9.

It is also envisaged that the depth to which the grooves 8 are formed in the waveguide block 1 may vary in dependence upon the distance from one end thereof.

The features disclosed in the foregoing description in the following claims and/or in the accompanying drawings may, both separately and in combination thereof, be material for realising the invention in diverse forms thereof.

## Claims

1. A waveguide comprising a block of substantially transparent material supporting the transmission of multiple wavelengths of light, said waveguide having: an input portion through which a light signal enters the waveguide; an output portion through which said signal exits the waveguide; and focusing means substantially opposite the output portion to direct light transmitted through the waveguide and impinging on the focusing means towards the output portion.

2. A waveguide according to Claim 1, wherein the focusing means comprises an indentation in the waveguide block.

3. A waveguide according to Claim 2, wherein the indentation comprises a concave groove.

4. A waveguide according to Claim 2, wherein the indentation comprises a concave dome.

5. A waveguide according to any preceding claim, wherein the internal surface of the focusing means is internally reflective.

6. A waveguide according to any preceding claim, wherein the external surface of the focusing means is provided with a reflective coating.

7. A waveguide according to Claim 6, wherein the coating is a metallic layer.

8. A waveguide according to any preceding claim, wherein a plurality of focusing means are provided along the waveguide block, there being a corresponding output portion opposite each focusing means.

9. A waveguide according to Claim 8, wherein all the focusing means are located along one surface of the waveguide block.

10. A waveguide according to any preceding claim, wherein the input portion is substantially opposite a focusing means such that the light signal enters the waveguide towards the focusing means, said focusing means reflecting the light along the waveguide block.

11. A waveguide according to Claim 10, wherein the input portion and the output portion comprise the same portion of waveguide block opposite the focusing means.

12. A waveguide according to any one of Claims 1 to 9, wherein the input portion comprises a portion of the waveguide block at an end of the block.

13. A waveguide according to any preceding claim, wherein one or each end of the waveguide block is provided with a reflective surface.

14. A waveguide according to any one of Claims 1 to 12, wherein one or each end of the waveguide block is provided with a diffuser.

15. A waveguide according to any preceding claim, wherein the or each input portion or output portion is provided with a lens to focus light into or out of the waveguide block.

16. A local bus system for a computer comprising a waveguide according to any preceding claim, wherein the light signal comprises a light signal from an optoelectronic transceiver for transmitting and receiving light signals, the light signals being generated in response to electrical signals generated by a component of the computer to which the transceiver is connected, the component being electrically decoupled from the other components of the computer by the waveguide.

17. A local bus system according to Claim 16, wherein an optoelectronic transceiver is located adjacent the or each output portion of the waveguide block.

18. A local bus system according to Claim 16 or 17, wherein a fibre optic cable is situated between an input portion or an output portion and a respective optoelectronic transceiver.

19. A local bus system according to any one of Claims 16 to 18, wherein the optoelectronic transceivers operate at predetermined wavelengths to prevent interference between light signals in the waveguide block.
